# EUROPÄISCHE PATENTSCHRIFT

(11) **EP 2 463 130 B1**
(45) Veröffentlichungstag und Bekanntmachung des Hinweises auf die Patenterteilung: **12.11.2014**
(21) Anmeldenummer: 11191723.3
(22) Anmeldetag: 02.12.2011
(51) Int. Cl.: B60H 1/00, B60H 1/34, F24F 13/14

(54) **Bedienelement**
Operating element
Elément de commande

(30) Priorität: 07.12.2010 DE 202010013073 U
(43) Veröffentlichungstag der Anmeldung: 13.06.2012
(73) Patentinhaber: Dr. Schneider Kunststoffwerke GmbH, 96317 Kronach-Neuses (DE)
(72) Erfinder: Trinkwalter, Bernd, 96328 Küps (DE); Uhlenbusch, Olaf, 96275 Marktzeuln (DE)
(74) Vertreter: Pröll, Jürgen

(56) Entgegenhaltungen:
- DE-A1- 10 258 955
- DE-U1- 29 915 938
- DE-U1-202008 008 872
- FR-A1- 2 939 208

## Beschreibung

Die vorliegende Erfindung betrifft ein Bedienelement mit den Merkmalen des Patentanspruches 1.

Aus der DE 10 2007 059 190 A1 ist ein Luftausströmer mit einem Bedienelement bekannt, das seitlich neben einer Luftaustrittsöffnung angeordnet ist. Durch Drehen des knopfförmigen Bedienelements kann ein Volumenstrom von aus dem Luftausströmer austretender Luft reguliert werden. Weiterhin ist der Bedienknopf um zwei senkrecht aufeinander stehende Achsen drehbar, um eine Anordnung von parallelen horizontalen oder vertikalen Lamellen des Luftausströmers zu steuern.

Aus der EP 1 375 217 B1 ist ein Luftausströmer mit einem seitlich neben dem Luftausströmer angeordneten Bedienelement bekannt. Das Bedienelement ist entlang zweier senkrecht aufeinander stehender Achsen kippbar. Bei einer vertikalen Drehung des Bedienelements werden vertikale Lamellen des Luftausströmers betätigt. Bei einer horizontalen Drehung des Bedienelements werden sowohl die horizontalen Lamellen des Luftausströmers als auch eine Schließklappe zum Steuern eines Volumenstroms betätigt.

Aus der DE 102 26 441 B3 ist ein Luftausströmer mit einem seitlich angeordneten Bedienelement bekannt. Durch Drücken auf das Bedienelement werden die Lamellen des Luftausströmers geöffnet und eine mit diesem über einen entsprechenden Mechanismus verbundene Drosselklappe geöffnet.

Aus der DE 20 2010 000 445 U1 ist ein weiterer Luftausströmer mit einem multifunktionalen Bedienknopf offenbart. Über diesen Bedienknopf sind sowohl Horizontallamellen als auch Vertikallamellen des Luftausströmers verstellbar.

Aus der DE 20 12 000 A ist ein Luftausströmer mit einem seitlich angeordneten Bedienelement bekannt. Das Bedienelement ist entlang zweier senkrecht aufeinander stehender Achsen kippbar und dient ebenfalls zum Verstellen von horizontalen bzw. vertikalen Lamellen des Luftausströmers. Zusätzlich kann durch die Drehung des Bedienelements eine Steuerung der Luftklappe im Luftzuführungskanal zur Einstellung des austretenden Luftvolumenstromes erreicht werden.

Aus der EP 1 602 514 A1 ist eine Eingabeeinheit zur Steuerung der abzugebenden Luftwärme in einem Kraftfahrzeug offenbart. Hierzu ist eine Düse vorgesehen, die eine Luftstromrichtungseinheit aufweist, wobei die Luftdüse mit der Richtungseinheit von einer elektrischen Steuereinheit umgeben ist.

Aus der DE 20 2008 008 872 U1 ist eine Luftdüse gemäß Oberbegriff des Anspruchs 1 zur Führung eines Luftstroms aus einem Luftzuführungsschacht bekannt. Die Luftdüse besteht aus einem Gehäuse, das in einem Wanddurchbruch einsetzbar und/oder hinter diesem befestigbar ist. Das Gehäuse weist vorderseitig eine runde Luftausströmöffnung mit mindestens einer Schließklappe im Innenraum des Gehäuses auf. An der die runde Luftausströmung bildende Mantelwand des Gehäuses ist ein Betätigungsring drehbar gelagert, der über eine Koppelmechanik in Rückverbindung mit der mindestens einen Schließklappe derart steht, dass bei Drehung des Betätigungsringes in eine Richtung die mindestens eine Schließklappe aus einer Öffnungsstellung in eine quer zur Längsachse des Gehäuses verlaufende Schließstellung verschwenkt.

Aus DE 299 15 938 ist eine Luftleitvorrichtung zur richtungsmäßig definierten Einleitung von auf der Rückseite der Vorrichtung zugeführter Luft in einen Raum, insbesondere dem Innenraum eines Kraftfahrzeuges, bekannt. Die Luftleitvorrichtung weist Mittel zum Einstellen der Richtung der Luftleiteinrichtung sowie Mittel zur Einstellung der Luftmenge, die in den Raum einströmen soll, auf. Die Menge und die Richtung der Luftmenge kann über ein betätigungssensitives Feld eingestellt werden.

Aus FR 2 939 208 A1 ist eine Lüftungsklappe offenbart. Mittels einem Schieberegler kann die Menge der durch die Lüftungsklappe zu leitenden Luft begrenzt werden.

Aus DE 102 58 955 A1 ist eine Bedieneinrichtung für eine Fahrzeugklimaanlage bekannt. Diese Bedieneinrichtung besteht aus einem ersten Wählelement zum Anwählen einer Temperatur, wobei das erste Wählelement um eine erste Drehachse drehbar angeordnet ist. Es ist ein zweites Wählelement, zum Anwählen eines Gebläsevolumenstromes angeordnet, wobei das zweite Wählelement ebenfalls um die erste Drehachse drehbar angeordnet ist. Außerdem ist ein drittes Wählelement vorgesehen, mit dem die Verteilung des Gebläsestromes auf einzelne Luftauslässe veränderbar ist, wobei das dritte Wählelement um eine zweite Drehachse drehbar ist und die zweite Drehachse im Wesentlichen senkrecht zur ersten Drehachse angeordnet ist.

Aus DE 198 07 292 A1 ist eine Belüftungsvorrichtung für einen Innenraum eines Kraftfahrzeuges bekannt. Die Belüftungsvorrichtung umfasst mindestens eine mit dem Luftstrom beaufschlagbare Ausströmerdüse mit einer innenraumseitigen Luftaustrittsöffnung, einem Ausströmergehäuse und einem gegen dem Ausströmergehäuse mit zwei Freiheitsgraden verschwenkbar gelagerten Luftleitkörper mit von Luftstrom durchströmenden Luftleitöffnungen. Um eine leichtere Verstellung der Richtung des Luftstroms und eine rasche, eindeutige Erkennung der eingestellten Luftströmungsrichtung zu ermöglichen, ist der Luftleitkörper innenseitig von der Luftaustrittsöffnung der Ausströmerdüse angeordnet und bildet das Bedienelement zur Verstellung der Richtung des Luftstroms im Innenraum.

Aus DE 10 2008 051 251 A1 ist eine Versorgungseinrichtung für ein Verkehrsmittel offenbart. Die Versorgungseinrichtung weist eine erste Komponente in Form einer Luftdusche mit einem Lufteingang um mindestens einem Luftauslass und eine zweite Komponente in Form einer Beleuchtungseinrichtung auf. Die erste und die zweite Komponente sind im Wesentlichen zentrisch zueinander angeordnet, wobei eine der beiden Komponenten die andere Komponente im Wesentlichen ringförmig umschließt. Dadurch wird eine integrale Leseleuchte mit einer Luftdusche bzw. eine integrale Luftdusche mit einer Leseleuchte realisiert, die wenig Bauraum beansprucht.

Bei den bekannten Luftausströmern tritt das Problem auf, dass eine Bedienung des Bedienknopfes unhandlich ist, da ein Benutzer, der beispielsweise lediglich eine Regulierung des Volumenstroms erreichen will, bei der Betätigung des Bedienknopfes gleichzeitig leicht die Verstellung der Lamellen des Luftausströmers bewirkt. Wird andererseits lediglich die Einstellung der Richtung des austretenden Luftstroms durch eine entsprechende Steuerung der Lamellen gewünscht, tritt oftmals eine ungewünschte Veränderung oder Verstellung des Luftstroms auf.

Es ist die der Erfindung zugrunde liegende Aufgabe ein Bedienelement bereit zu stellen, durch das die Bedienbarkeit der Steuerung eines Luftausströmers verbessert wird. Diese Aufgabe wird durch ein Bedienelement mit den Merkmalen des Patentanspruches 1 gelöst.
Vorteilhafte Ausgestaltungen der Erfindung ergeben sich anhand der abhängigen Ansprüche, der weiteren Beschreibung und der Figuren.

Die Lösung der Erfindung sieht einen verdrehbar oder verkippbar, beispielsweise in einer Hülse oder einem Bedienrad gelagerten, Bedienknopf vor, der mindestens um horizontale und vertikale Achsen verschwenkbar und/oder verkippbar ist oder aber auch in allen Achsrichtungen drehbar oder verkippbar ist. In der Rückseite ist eine Kopplungsmechanik vorgesehen oder auch eine Schalterebene, um dadurch die Lamellenstellungen verändern zu können. Wenn darüber hinaus die Lamellen in Gehäusen mit kugelförmiger Außenführung oder in einem schwenkbaren Gehäuse gelagert sind, kann hierüber die Richtung des austretenden Luftstrahls über eine Mitkopplungsmechanik verändert werden. Die diesen Bedienknopf umgebenden weiteren Einstellmittel, wie der mindestens eine Bedienring können beispielsweise dazu verwendet werden, um direkt oder indirekt die Luftklappe in einem Luftzuführungskanal der Düse aus einer Öffnungsstellung in eine Verschließstellung und umgekehrt oder in Mittenstellungen zu verbringen. Mittelbar kann dies beispielsweise durch elektronische Steuerung erfolgen, wobei in Abhängigkeit von der Dreh- bzw. Verschwenkstellung Kontaktbahnenimpulse für einen steuerbaren Antriebsmotor der Klappe generiert werden.

Durch die erfindungsgemäße Lösung ist der Vorteil gegeben, dass ein ungewünschtes Verstellen der Größe eines Luftstroms beim Verstellen einer Richtung und ein ungewünschtes Verstellen einer Richtung des Luftstroms beim Verändern der Größe vermieden wird. Dennoch ist zumindest optisch eine Einknopfbedienung gegeben. Der Bedienknopf ist in dem ringförmigen Bedienrad eingebettet. Hierzu weist das Bedienrad eine zentrale Aussparung auf, die mit kalottenförmigen Lagerabschnitten an dem Bedienknopf anliegt.

Der Bedienknopf kann eine kalottenförmige Ausnehmung zur Aufnahme eines Betätigungsfingers oder eine nach außen gewölbte, mit Griffrippen versehene Kontur aufweisen. Dadurch ist der Vorteil gegeben, dass eine Bedienung aufgrund der ergonomischen Form des Bedienknopfes verbessert wird, da dadurch ein Abrutschen eines Fingers beim Bedienen vermieden wird.

In einer weiteren Ausführungsform des Bedienelements weist das Bedienrad an seiner Außenseite Einkerbungen oder Markierungs- oder Griffrippen auf. Dadurch werden ein Abrutschen von Fingern beim Verdrehen des Bedienrades vermieden und die Betätigung des Bedienrades erleichtert.

Erfindungsgemäß steuert der Bedienring den Luftstrom über eine Verbindungsmechanik, eine Zahnradvorrichtung, die sich beim Drehen des Bedienrades mit dreht. In Eingriff stehende Übertragungseinrichtungen bewirken ein Verschwenken der Luftdrosselklappe im Gehäuse.

Dies weist den Vorteil auf, dass der Luftstrom über einfache mechanische Mittel regulierbar ist. Durch die Verwendung einer Zahnradvorrichtung statt eines Gestänges zum Steuern des Luftstroms wird darüber hinaus ein oftmals auftretendes Verklemmen verhindert.

Erfindungsgemäß steuert der Bedienknopf die Richtung des Luftstroms über ein Gestänge. Hierüber ist die Steuerung von Lamellen des Luftausströmers einfach über entsprechende Stangen und Führungselemente möglich.
In einer beispielhaften Bauform des Bedienelements weist dieses zumindest einen Schalter zur elektrischen Steuerung der Richtung oder der Größe des Luftstroms auf. Der mindestens eine Schalter dient zur Aktivierung einer elektrischen Steuereinheit, mittels welcher, elektrisch betätigt, die Klappe oder die Lamellen, die dem Luftausströmer zugeordnet sind, ansteuerbar und in ihrer Stellung im/zum Luftausströmer veränderbar sind. Die Klappe und gegebenenfalls die Lamellen werden über magnetische Aktuatoren oder mechanischen Antrieb in gewünschter Weise gesteuert. Dies weist ferner den Vorteil auf, dass auf eine mechanische Kopplung zwischen Bedienelement und Luftausströmer verzichtet werden kann. In einer weiteren vorteilhaften Ausführungsform des Bedienelements ist ein Touchscreen oder ein kapazitives berührungsempfindliches Bedienfeld dem Bedienelement zugeordnet.

In einer weiteren Ausführungsform des Bedienelements weist der Bedienknopf ein ringförmiges Beleuchtungselement aus durchsichtigen Kunststoff auf, das hinterleuchtet ist oder aus lichtreflektierenden Material besteht. Dadurch entsteht der Vorteil, dass die Stellung des Bedienknopfes auch bei Dunkelheit wahrnehmbar ist. Wenn beispielsweise die Anzeigeelemente rot hinterleuchtet sein sollen, so kann hierfür eine Lichtquelle in der Farbe Rot verwendet werden oder aber ein gefärbtes Glas oder ein Kunststoffeinsatz in dieser Farbe vorgesehen sein. Wenn hingegen Materialien zum Einsatz kommen, die Licht reflektieren, so kann beispielsweise auch eine Einfärbung einer Anzeige in Weiß erfolgen. Diese reflektiert beispielsweise auftreffendes UV-Licht. Mannigfaltige Gestaltungsmöglichkeiten eröffnen sich bei der Realisierung der Erfindung. Dabei müssen selbstverständlich die Lichtquellen so platziert sein, dass der gewünschte Anzeigeeffekt oder Hinterleuchtungseffekt möglich ist.
In einer weiteren Ausführungsform des Bedienelements weist dieses eine Anzeige zur Darstellung der eingestellten Größe des Luftstroms auf, was von einem Benutzer wahrnehmbar ist.

In einer weiteren Ausführungsform des Bedienelements weist dieses ein weiteres, um den Bedienring herum angeordnetes, ringförmiges Bedienrad zum Einstellen einer weiteren Funktion, z. B. zur Beimischung eines warmen Luftstroms auf. Dadurch wird der Vorteil erreicht, dass sich mit wenigen Handgriffen nahezu alle Eigenschaften des austretenden Luftstroms unabhängig voneinander steuern lassen.

Der Bedienknopf lässt sich nicht nur mit Bedienrädern kombinieren, sondern auch mit auf einem Radius angeordneten, den Bedienknopf seitlich überstehenden Schwenkhebeln mit Bedienansätzen, die um definierte Winkel verschwenkbar angeordnet sind. Wenn beispielsweise nur die Luftklappe hierüber gesteuert werden soll, braucht nur ein einziger Schwenkhebel vorgesehen sein. Sollen zusätzliche Funktionen, wie beispielsweise die Kippfunktion eines Lamelleneinsatzes, der in einem Gehäuse gelagert ist und bei dem das Gehäuse gegenüber dem Düsengehäuse verschwenkbar ist, realisiert werden, so ist ein weiterer Hebel auf der gleichen Schwenkachse anzubringen. Der Bedienknopf wird also beispielsweise durch einen oberen und einen unteren Schwenkhebel eingefasst, die in einer Lagerhülse mit in die Wandung eingeschnittenen Führungen gelagert sind.

Alternativ können aber auch um den Bedienknopf herum ein oder mehrere Stellelemente in Form von Drehknöpfen angebracht sein, die sich axial zur Mittenachse des Bedienknopfes erstrecken und mit einem Finger bedienbar sind. Auch diese Kombination ermöglicht praktisch eine Einhandbedienung.

Die Beschreibung der Erfindung anhand des konkreter Ausführungsbeispiele stellt keine Limitierung der Erfindung auf eines dieser konkreten Ausführungsbeispiele dar.

Die Ausführungsbeispiele der Erfindung sind in den Zeichnungen dargestellt und werden im Folgenden näher beschrieben.

Es zeigen:
- Fig.1: eine schematische Ansicht des erfindungsgemäßen Bedienelements,
- Fig.2: eine perspektivische Ansicht auf Lamellen eines Luftausströmers,
- Fig.3: eine schematische Ansicht eines Luftkanales mit Regelklappe,
- Fig.4: eine perspektivische Ansicht eines Luftausströmers mit seitlich angeordnetem Bedienelement,
- Fig.5: eine erste Ausführungsform des Bedienelements,
- Fig.6: eine weitere Ausführungsform des Bedienelements,
- Fig.7: eine weitere Ausführungsform des Bedienelements,
- Fig.8: eine weitere Ausführungsform des Bedienelements,
- Fig.9: ein weiteres Beispiel eines Bedienelements mit drehbaren Stellelementen und
- Fig.10: ein Beispiel, bei dem der Bedienknopf von Schwenkhebeln umgeben ist.

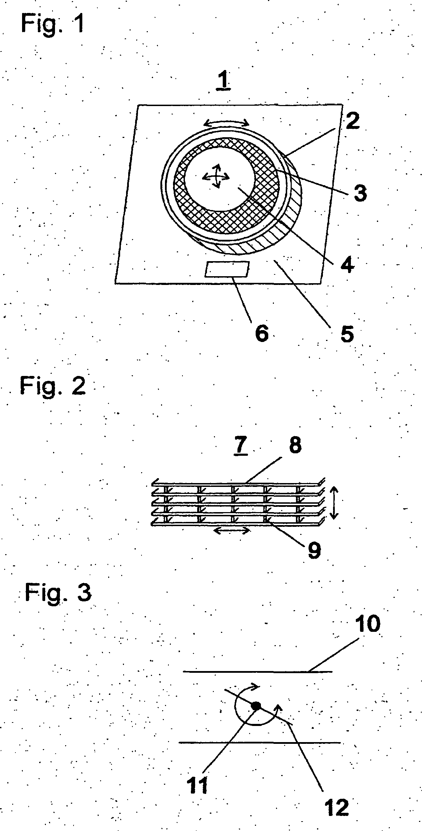

Es folgt die Erläuterung der Erfindung anhand der Zeichnungen nach Aufbau und Wirkungsweise der dargestellten Erfindung.
Bei der Figurenbeschreibung wurden bei den Figuren Fig. 1 bis Fig. 10, soweit möglich, für gleiche Elemente identische Bezugszeichen verwendet. Dies ermöglicht eine einfachere Darstellung und eine bessere Verständlichkeit der Erfindung.

Fig. 1 zeigt eine schematische Ansicht des erfindungsgemäßen Bedienelements 1. Das Bedienelement 1 umfasst einen zentral angeordneten Bedienknopf 3. Der Bedienknopf 3 ist in der gezeigten Ausführung nach Fig. 1 kugelförmig bzw. weist die Form eines Kugelabschnitts oder eines Kugelsegments auf. In einer alternativen Ausführung der Erfindung ist vorgesehen, dass der Bedienknopf 3 kreisförmig ist, d. h. eine Scheibenform hat oder dass er eine kalottenförmige Aussparung 4 aufweist. Der Bedienknopf 3 ist entlang der auf diesem gezeigten Pfeilrichtungen in vertikaler und horizontaler Richtung verdrehbar und/oder kippbar. Dazu ist dieser derart ausgeformt, dass sich der Bedienknopf 3 in den gezeigten Richtungen verdrehen und/oder verkippen lässt, ohne dabei einen den Bedienknopf 3 umgebenden Bedienring 2 zu berühren. Beispielsweise kann der Bedienknopf 3 hierzu halbkugelförmig oder kugelsegmentförmig ausgebildet sein.

In einer vorteilhaften Ausgestaltung der Erfindung weist der Bedienknopf 3 eine zentrale Aussparung 4 auf. Diese Aussparung 4 dient als eine Bedienmulde in der ein Finger eines Bedieners Halt findet, um ein Abrutschen bei der Bedienung zu vermeiden und die Benutzerfreundlichkeit des Bedienelements zu erhöhen. Die Aussparung 4 kann zusätzlich mit einer Oberflächenstruktur versehen sein, durch die ein Abrutschen bei der Betätigung des Bedienknopfes weiter vermindert wird.

Zur Lagerung des Bedienknopfes 3 kann eine zweiachsige Bedienknopfaufnahme hinter einer Vorderwand 5 vorgesehenen sein. Allerdings ist es ebenfalls möglich den Bedienknopf 3 in einem Kugeldrehgelenk zu lagern, so dass dieser in beliebiger Richtung verkippbar und/oder verdrehbar ist. Die Vorderwand 5 wird beispielsweise durch ein Armaturenbrett eines Kraftfahrzeuges gebildet, in dem der Bedienknopf 3 neben einem Luftausströmer 7 angeordnet ist.

Der Bedienknopf 3 kann von einen Bediener in jeder der gezeigten Richtungen betätigt werden. Beispielsweise kann ein Bediener den Bedienknopf 3 nach oben, nach unten, nach rechts oder nach links verschwenken, verdrehen und/oder verkippen. Dieses Verschwenken, Verdrehen und/oder Verkippen kann durch ein Drücken des Bedienknopfes 3 in die gewünschte Richtung erreicht werden. Nach dem Betätigen des Bedienknopfes 3 kann dieser in der verkippten, verdrehten oder verschobenen Position verbleiben. Alternativ kann das Bedienelement 1 derart konstruiert sein, dass der Bedienknopf 3 nach der Betätigung durch einen Benutzer zurückfedert. Dazu kann das Bedienelement 1 zusätzlich mit einer geeigneten Federkonstruktion ausgerüstet sein.

Der Bedienknopf 3 dient zum Steuern der Richtung eines Luftstroms, der durch einen Luftausströmer 7 strömt, beispielsweise in einen Fahrgastraum eines Kraftfahrzeuges. Wird beispielsweise der Bedienknopf 3 durch einen Bediener nach oben verdreht, verschwenkt und/oder verkippt, verändert sich die Richtung eines aus einem Luftausströmer 7 austretenden Luftstroms nach oben. Wird beispielsweise demgegenüber der Bedienknopf 3 nach unten verdreht, verschwenkt und/oder verkippt, verändert sich die Richtung des aus dem Luftausströmer 7 austretenden Luftstroms derart, dass dieser nach unten gerichtet wird. Falls der Bedienknopf 3 von einem Bediener nach rechts oder nach links verdreht, verschwenkt und/oder verkippt wird, wird ein aus einem Luftausströmer 7 austretender Luftstrom nach rechts oder nach links gesteuert. Die Steuerung des Luftstroms kann über eine mechanische oder eine elektrische Kopplung erfolgen. Bei einer elektrischen Kopplung mit dem Luftausströmer 7 umfasst das Bedienelement 1 geeignete Schaltervorrichtungen, die einen gedrückten Zustand des Bedienknopfes 3 erfassen, beispielsweise Mikroschalter. Durch den beim Drücken des Bedienknopfes 3 erfolgenden Kontaktschluss der Schaltvorrichtung können elektrische Antriebe angesteuert werden, die Lammellen des Luftausströmer 7 zum Verändern der Richtung des Luftstroms verfahren oder drehen.

Weiter umfasst das Bedienelement 1 den Bedienring 2, der entlang der in Fig. 1 gezeigten Pfeilrichtung um den Bedienknopf 3 herum verdrehbar ist. Der Bedienring 2 dient zum Steuern des Volumenstromes des aus dem Luftausströmer austretenden Luftstroms. Dazu kann der Bedienring 2 durch einen Bediener zwischen einem rechten Anschlag stufenlos bis zu einem linken Anschlag verdreht werden. Befindet sich der Bedienring 2 beispielsweise am linken Anschlag wird der Luftstrom aus dem Luftausströmer gesperrt. Befindet sich der Bedienring 2 hingegen am rechten Anschlag wird der Luftstrom aus dem Luftausströmer auf einen maximalen Volumenstrom eingestellt. Die Verdrehung zwischen den beiden Anschlägen kann dabei stufenlos oder über Zwischenpositionen erfolgen, in denen der Bedienring 2 spürbar einrastet. Dies weist den Vorteil auf, dass ein Benutzer den Luftstrom 2 exakt auf eine durch die Einrastung des Bedienringes 2 gegebene Einstellung regulieren kann.

Insbesondere bei einer elektrischen Steuerung des Luftstroms kann das Bedienelement 1 derart ausgestaltet sein, dass ein anschlagloses Verdrehen des Bedienringes 2 möglich ist. Wird beispielsweise der Bedienring 2 nach Links gedreht, vermindert sich ein Luftstrom durch den Luftausströmer, während sich bei einer Drehung nach Rechts sich der Luftstrom durch den Luftausströmer erhöht. Dazu kann das Bedienelement 1 mit geeigneten Kontaktvorrichtungen ausgestattet sein, die ein Verdrehen des Bedienrades 1 in die eine oder andere Richtung erfassen und die entsprechende elektrische Signale erzeugen, über die eine Luftklappe innerhalb des Luftausströmers gesteuert wird.

Zusätzlich weist das Bedienelement 1 eine Anzeige 6 auf, die zur Darstellung einer Einstellung des Bedienrings 2 oder zur Darstellung weiterer Information, wie beispielsweise einer Temperatur dient.

Fig. 2 zeigt eine schematische Ansicht auf vertikale und horizontale Lamellen 8 und 9 eines Luftausströmers 7. Wenn der Bedienknopf 3 des Bedienelements 1 nach rechts oder links gedreht wird, können beispielsweise die vertikalen Lamellen 9 nach rechts oder links verschwenkt oder verdreht werden, so dass der Luftstrom nach rechts oder links abgelenkt wird. Wenn der Bedienknopf 3 nach oben oder unten gedrückt wird, können sich die horizontalen Lamellen 8 in eine Richtung derart verdrehen, dass der Luftstrom nach oben oder unten gelenkt wird. Eine Kopplung des Bedienknopfes 3 mit den Lamellen 8 und 9 kann beispielsweise über ein geeignet angepasstes Gestänge erfolgen. Allerdings ist die Erfindung nicht auf die Verwendung der gezeigten Anordnung beschränkt und es können alle Luftausströmer in Verbindung mit dem Bedienelement 1 verwendet werden durch die eine Veränderung der Richtung eines Luftstroms bewirkt werden kann.

Fig. 3 zeigt schematisch einen Luftkanal 10, mit der an einer Drehachse 11 gelagerten Luftklappe 12. Die Luftklappe 12 dient zum Steuern der Größe bzw. Menge des Luftstroms. Befindet sich die Luftklappe 12 in einer vertikalen Position wird der Luftstrom gesperrt. Befindet sich die Luftklappe 12 in einer horizontalen Lage kann die Luft ungehindert in dem Luftkanal 10 strömen. Zur besseren Abdichtung kann die Luftklappe 12 an den Randbereichen beispielsweise mit einer Gummidichtung versehen sein.

Die Luftklappe 12 ist beispielsweise mit dem Bedienring 2 des Bedienelements 1 über eine spezielle Zahnradvorrichtung oder ein Getriebe gekoppelt. Allerdings ist die Erfindung nicht auf die Verwendung der gezeigten Anordnung beschränkt und es können alle Luftausströmer in Verbindung mit dem Bedienelement 1 verwendet werden durch die eine Veränderung des Volumenstroms aus dem Luftausströmer austretender Luft bewirkt werden kann.

Durch das erfindungsgemäße Bedienelement 1 wird der Vorteil erreicht, dass sich eine Richtung des Luftstroms und eine Intensität des Luftstroms unabhängig voneinander steuern lassen. Insbesondere kann vermieden werden, dass eine Richtungssteuerung des Luftstroms die Intensität des Luftstroms beeinflusst und umgekehrt. Dadurch wird die Bedienerfreundlichkeit des Bedienelements 1 deutlich gegenüber dem Stand der Technik verbessert.

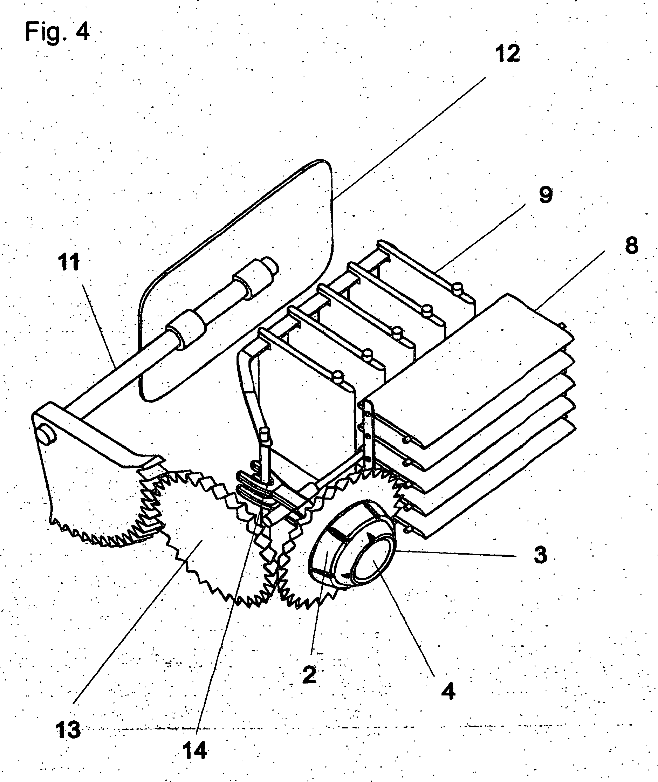

Fig. 4 zeigt eine perspektivische Ansicht des erfindungsgemäßen Bedienelements 1 in Verbindung mit einem Luftausströmer bzw. im Luftausströmer angeordnete Lamellen 8, 9 und einer im Luftkanal befindlichen Luftklappe 12.

Das Bedienelement weist den Bedienring 2 und den Bedienknopf 3 auf. An dem Bedienknopf 3 ist eine zentrale, muldenförmige Aussparung 4 vorgesehen, die ein Abrutschen eines Fingers eines Benutzers bei der Bedienung verhindern soll und die Bedienung für einen Benutzer erleichtert. Der Bedienring 2 ist mechanisch mit einem hinter einer Wand angeordneten Zahnrad verbunden, das in ein Zahnrad 13 eingreift und durch das die Winkelstellung der an der Drehachse 11 gelagerten Luftklappe 12 über ein weiteres segmentförmig ausgebildetes Zahnrad verändert werden kann. Alternativ kann anstelle des Zahnrades 13 die Bewegung auch über ein Gestänge übertragen werden. Weiter ist der Bedienknopf 3 mechanisch über ein Gestänge 14 sowohl mit horizontalen Luftführungslamellen 8 als auch vertikalen Luftführungslamellen 9 des Luftausströmers verbunden. Eine Betätigung des Bedienknopfes 3 führt über die einzelnen Stangen des Gestänges 14 zu einer entsprechenden Verstellung der Neigung der Lamellen 8 und/oder 9. Dadurch lässt sich die Richtung des Luftstroms verändern. In der gezeigten Ausführungsform sind die horizontalen und vertikalen Lamellen 8, 9 hintereinander angeordnet. Alternativ ist es jedoch ebenfalls möglich einen Luftausströmer zu verwenden, bei dem die horizontalen und vertikalen Lamellen 8, 9 ineinander verschachtelt angeordnet sind.

Alternativ zu der dargestellten mechanischen Kopplung über Zahnräder und ein Gestänge kann eine nicht erfindungsgemäße Verstellung der Luftklappe 12 und der Lamellen 8 und 9 jedoch auch über einen elektrischen Verstellantrieb erfolgen. Dazu ist das Bedienelement mit entsprechenden Schaltervorrichtungen ausgestattet und die Verstellung der Luftklappe 12 und der Lamellen 8 und 9 wird beispielsweise über Elektromotoren bewirkt. Diese können beispielsweise über Kabel mit dem Bedienelement 1 verbunden sein.

In einer besonders vorteilhaften Ausführungsform umfasst das Bedienelement 1 eine Sendevorrichtung zur Übertragung von elektrischen Bediensignalen an eine entsprechende Empfangsvorrichtung des Luftausströmers, durch die die Signale an Steuerantriebe innerhalb weitergeleitet werden und eine entsprechende Steuerung des Luftausströmers 7 erfolgt. Die Signalübertragung zwischen Bedienelement 1 und Luftausströmer kann beispielsweise über Funk, WLAN oder Bluetooth, erfolgen.

Dadurch ergibt sich der Vorteil, dass auf eine entsprechende Verkabelung zwischen Bedienelement 1 und Luftausströmer 7 verzichtet werden kann und das Bedienelement an einer beliebigen Position innerhalb eines Fahrzeugs angeordnet werden kann, beispielsweise einem Lenkrad.

Alternativ kann ebenfalls vorgesehen sein den Luftausströmer 7 an ein Bus-System in dem Fahrzeug anzuschließen. In diesem Fall erfolgt die Steuerung des Luftausströmers 7 bzw. der Luftklappe 12 und der Verstellung der Lamellen 8, 9 über das ebenfalls an das Bus-system angeschlossene Bedienelement 1. Dazu ist das Bedienelement 1 mit einer Buskommunikationsvorrichtung zum Übertragen von Bediensignalen bereitgestellt.

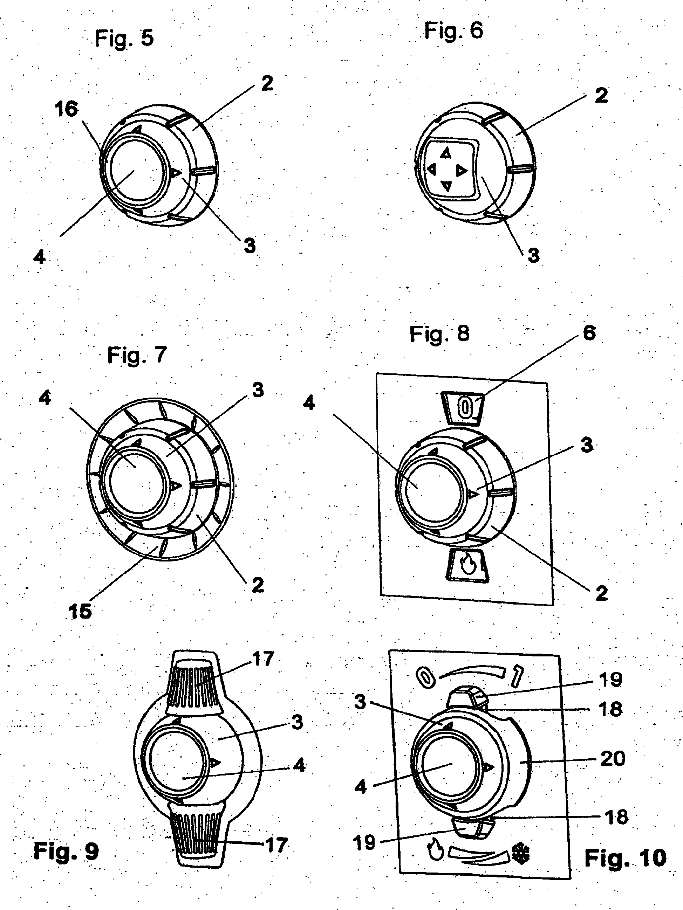

Fig. 5 zeigt eine erste Ausführungsform des Bedienelements 1 in perspektivischer Ansicht.

Der Bedienknopf 3 weist eine halbkugelförmige Form auf, in der zentral eine Aussparung 4, vorzugsweise als Bedienmulde, vorgesehen ist. Diese Bedienmulde 4 erhöht den Komfort bei einem Verkippen des Bedienknopfes 3. Indem ein Abrutschen des Fingers bei eine Betätigung vermieden wird, wird die Verstellung erleichtert. Zusätzlich kann die Bedienmulde 4 mit einem Elastomer beschichtet oder mit einer Struktur versehen sein, so dass sich der Bedienkomfort noch weiter erhöht. Statt der Bedienmulde 4 kann der Bedienknopf 3 jedoch auch mit einer aus dem Bedienknopf 3 hervortretenden Bedienstange bereitgestellt sein.

Durch die halbkugelförmige Form kann der Bedienknopf 3 innerhalb des Bedienringes 2 ohne Verklemmung verkippt werden. Statt der Halbkugelform sind für den Bedienknopf 3 jedoch alle Formen geeignet, die ein Verkippen oder Verdrehen des Bedienknopfes 3 innerhalb des Bedienringes 2 ermöglichen.

Zur Anzeige der Betätigungsrichtungen des Bedienknopfes sind auf diesem entsprechende Pfeile angeordnet. Zusätzlich ist in der Aussparung 4 ein kreisförmiges Beleuchtungselement 16 vorgesehen. Durch das kreisförmige Beleuchtungselement 16 kann ein Bediener die Lage des Bedienknopfes 3 auch im Dunkeln wahrnehmen. Das Beleuchtungselement 16 kann beispielsweise aus einem Lichtleiter aus transparentem Kunststoff bestehen, der durch eine zuschaltbare Lichtquelle hinterleuchtet wird. Diese Lichtquelle kann beispielsweise durch Leuchtdioden gebildet werden. Durch den Lichtleiter wird das von der Lichtquelle ausgesandte Licht an die Vorderseite des Bedienknopfes 3 geleitet. Stattdessen kann jedoch ebenfalls eine entsprechende Beschichtung mit leuchtender oder fluoreszierender Farbe vorgenommen werden.

Der Bedienring 2 ist um den Bedienknopf 3 herum drehbar angeordnet. Zur besseren Bedienbarkeit weist der Bedienring 2 an seinem Umfang Rillen oder Aussparungen auf, die eine bessere Verstellung des Bedienringes 2 ermöglichen, da so ein Abrutschen der Finger vom Bedienring 2 verhindert werden kann. Der Bedienring 2 liegt an der Kugelform des Bedienknopfes 4 an, so dass lediglich ein kleiner Spalt zwischen Bedienring 2 und Bedienknopf 4 besteht.

Sowohl der Bedienknopf 3 als auch der Bedienring 2 können aus einem geeigneten Kunststoff hergestellt sein. Die Verwendung von Kunststoffen ist vorteilhaft, da sich diese leicht verarbeiten lassen und mit geringem technischen Aufwand die gewünschte Form hergestellt werden kann. Allerdings können im Allgemeinen alle Materialien zum Einsatz kommen, die zur Herstellung des Bedienelements 1 geeignet sind.
Zusätzlich kann zwischen Bedienring 2 und Bedienknopf 4 eine Dichtung vorgesehen sein, die verhindert, dass Schmutz in den Zwischenraum zwischen Bedienknopf 4 und Bedienring 2 dringt und zusätzlich das Bediengefühl beim Betätigen des Bedienelements 1 verbessert. Weiter kann die Dichtung zwischen Bedienring 2 und Bedienknopf 3 derart angepasst sein, dass die geneigte Position des Bedienknopfes 3 durch eine durch die Dichtung erzeugte Haftreibung erhalten bleibt.

Fig. 6 zeigt eine weitere Ausführungsform des Bedienelements 1. In dieser Ausführungsform gemäß Fig. 6 ist der Bedienknopf 3 halbkugelförmig ohne Aussparung 4 oder Bedienmulde gebildet. Zur Darstellung der möglichen Bewegungsrichtungen ist auf den Bedienknopf 3 eine entsprechende Anzeige oder Darstellung vorgesehen. Diese Anzeige kann beispielsweise hinterleuchtet werden, um einem Bediener die möglichen Bewegungsrichtungen des Bedienknopfes 3 im Dunkeln anzuzeigen. Dies kann durch entsprechende lichtleitende und hinterleuchtete Kunststoffe oder den Einsatz einer im Dunkeln fluoreszierenden Farbe erfolgen, die z. B. mit UV-Licht bestrahlt wird.

In einer weiteren Ausführungsform ist der Bedienknopf 3 als eine Kugel gebildet, die sich leichtgängig, stufenlos und anschlagslos innerhalb des Bedienrades 3 drehen lässt, wie beispielsweise ein Track-Ball. Ein Rollen dieser Kugel entlang zweier Achsen in unterschiedlichen Richtungen kann durch optomechanische oder optische Sensoren erfasst werden. Die Steuerung der Richtung des Luftstroms erfolgt dann entsprechend der erfassten Drehbewegung der als Bedienknopf verwendeten Kugel. Insbesondere ist es vorteilhaft die Masse der Kugel derart zu wählen, dass diese nach einem einmaligen Anstoßen durch einen Bediener ihren Bewegungszustand für einen gewissen Zeitraum beibehält. Dadurch kann durch einen Bedienstoß des Benutzers auf die Kugel eine kontinuierliche und der Bewegung der Kugel folgende Verstellung des Luftausströmers erreicht werden.

Fig. 7 zeigt eine weitere Ausführungsform des Bedienelements 1. Diese Ausführungsform entspricht der in Fig. 5 gezeigten Ausführungsform, es ist zusätzlich zu dem ersten Bedienring 2 ein Bedienrad 15 in dem Bedienelement 1 bereitgestellt. Das Bedienrad 15 ist um den Bedienring 2 herum angeordnet und weist eine durch Rillen strukturierte Oberfläche auf, so dass dieses leicht von Hand verdreht werden kann.

Durch das Bedienrad 15 kann eine weitere Eigenschaft des aus dem Luftausströmer 7 austretenden Luftstroms eingestellt werden. Beispielsweise ist es möglich, das Bedienrad 15 mit einer Temperatursteuervorrichtung oder einer Klimaanlage elektrisch oder mechanisch zu koppeln, so dass durch ein Verdrehen des Bedienrades 15 die Temperatur des aus dem Luftausströmer 7 austretenden Luftstroms gesteuert werden kann. Allerdings ist es in dieser Ausführungsform ebenfalls möglich, die Funktion des Bedienringes 2 und des Bedienrades 15 zu vertauschen, so dass beispielsweise die Temperatur des Luftstroms durch den Bedienring 2 und die Menge bzw. Größe des Luftstroms durch das Bedienrad 15 gesteuert wird. Idealerweise ist die Form des Bedienrades 15 derart, dass dieses zusätzlich zu dem ersten Bedienrad 15 leicht zu bedienen ist. Das Bedienrad 15 kann dazu drehscheibenförmig um den Bedienring 2 angeordnet sein.

Alternativ ist vorgesehen, dass statt der gezeigten Drehscheibe einen unter dem Bedienring 2 hervortretenden Drehknopf oder Drehhebel zu verwenden. Durch Verdrehen dieses Drehhebels lässt sich dann die gewünschte Eigenschaft des austretenden Luftstroms einstellen.

Das in dieser Ausführungsform gezeigte Bedienelement ist besonders vorteilhaft, da sich durch das Bedienelement 1 mit einem Bedienknopf 4 und dem Bedienring 2 und dem Bedienrad 15 mit wenigen Handgriffen nahezu alle Eigenschaften des austretenden Luftstroms unabhängig voneinander steuern lassen.

Fig. 8 zeigt eine weitere Ausführungsform des Bedienelements 1. Diese Ausführungsform entspricht der in Fig. 5 gezeigten Ausführungsform, wobei das Bedienelement zusätzlich ein Anzeigeelement 6 umfasst. Durch dieses Anzeigeelement 6 lässt sich beispielsweise die Größe bzw. Menge bzw. das Volumen eines Luftstroms des aus dem Luftausströmer 7 austretenden Luftstroms anzeigen. Das Anzeigefeld 6 kann aus einem Sichtfenster bestehen, durch das Ziffern einer hinter dem Sichtfenster angeordneten Drehscheibe angezeigt werden können. Alternativ ist bei einem elektrischen Bedienelement 1 die Verwendung einer elektrischen Anzeige vorteilhaft. Diese kann beispielsweise aus einer Flüssigkristallanzeige oder einer Anzeige mit Leuchtdioden bestehen. Insbesondere kann eine Leuchtanzeige vorgesehen sein, die die Temperatur des austretenden Luftstroms durch Licht unterschiedlicher Farben anzeigt. So ist es beispielsweise möglich, einen kalten Luftstrom durch die Verwendung der Farbe Blau darzustellen, wohingegen ein warmer Luftstrom durch die Farbe Rot darstellbar ist.

Weiter kann der Bedienring 2 mit einer seitlich aus dem Umfang des Bedienringes 2 hervortretenden Anzeigenase bereitgestellt sein. Durch diese Anzeigenase kann der Bediener die Stellung des Bedienrades wahrnehmen.

Das nicht erfindungsgemäße Ausführungsbeispiel in Fig. 9 zeigt die Kombination eines Bedienknopfes 3, der in einer nicht dargestellten Hülse verschwenkbar gelagert ist. Oben- und untenseitig sind Stellelemente 17 drehbar angeordnet, und zwar um radial zum Bedienknopf 3 verlaufende Achsen. Diese drehbaren Stellelemente 17 weisen Rändelungen auf. Die Mittenachsen sind mit Stellgliedern oder mit Kontaktflächen, die auf einer Kreisbahn angeordnet sind, verbunden, um hierüber direkt oder indirekt Funktionen des Luftausströmers 7 zu steuern. Mit einer Hand kann also sowohl der Bedienknopf 3 in beschriebener Art und Weise durch Druckausübung auf die Fläche der Aussparung 4 als auch durch Drehen der Stellelemente 17 betätigt werden, um darüber verschiedene Funktionen steuern zu können.

Fig. 10 zeigt eine weitere nicht erfindungsgemäße Variante, bei der in einer Hülse 20, die an einer Gehäusefrontwand befestigt ist, der Bedienknopf 3 in alle Richtungen verstellbar gelagert ist. Auf der Mittenachse der Hülse 20 sind ferner verschwenkbar obenseitig und untenseitig Schwenkhebel 18 gelagert, die mit Mechaniken zur Funktionssteuerung beim Verschwenken um einen definierten Winkel verbunden sind oder mit einem Schleifer auf Kontaktbahnen aufgreifen, deren Impulse einen Motor steuern, um die Funktion hierüber einstellen zu können. Oben- und untenseitig sind Anzeigen aufgedruckt, so dass die Verstellung des Bedienansatzes 19 zugleich auch die Einstellung signalisiert. Anstelle eines Aufdruckes können auch hinterleuchtete Flächen vorgesehen sein und mit dem jeweiligen Schwenkhebel 18 ein Abdeckscheibensegment verbunden sein, das die Hinterleuchtung in dem Anzeigefeld größer oder kleiner erscheinen lässt.

Alle gezeigten Ausführungsformen des Bedienelements 1 können in geeigneter Weise kombiniert werden, um die erfindungsgemäßen Vorteile der in den Ansprüchen definierten Erfindung zu erreichen.

## Patentansprüche

1. Bedienelement (1) für einen Luftausströmer (7), mit:
- einem kreisförmigen, mindestens in horizontaler und vertikaler Richtung verkippbar und/oder verdrehbar gelagerten Bedienknopf (3) zum Steuern der Richtung eines aus dem Luftausströmer (7) austretenden Luftstroms,
- mindestens einen um den Bedienknopf (3) angeordneten, ringförmigen Bedienring (2) zur Einstellung mindestens der Größe oder Menge des aus dem Luftausströmer (7) austretenden Luftstroms, **dadurch gekennzeichnet, das s** der mindestens eine Bedienring (2) den Luftstrom über eine Verbindungsmechanik, die als Getriebe in Form von mindestens zwei ineinander greifender Zahnräder (13) oder Zahnradsegmenten ausgestattet ist, und eine im Luftstrom des Luftkanals angeordnete Luftklappe (12) betätigt und wobei mittels des Bedienknopfes (3) die Richtung des Luftstroms über ein Gestänge (14) steuerbar ist, das mit Mechaniken von horizontalen und vertikalen Lamellen (8, 9) verbunden ist.

2. Bedienelement (1) nach Anspruch 1, **dadurch gekennzeichnet , dass** der Bedienknopf (3) eine zentrale kalottenförmige Aussparung (4) oder eine nach außen gewölbte, mit Griffrippen versehene Kontur aufweist.

3. Bedienelement (1) nach einem der vorangehenden Ansprüche, **dadurch gekennzeichnet, dass** der mindestens eine Bedienring (2) an seiner Außenseite Einkerbungen oder Markierungs- oder Griffrippen aufweist.

4. Bedienelement (1) nach Anspruch 1, **dadurch ge** - **kennzeichnet**, **das** s das Bedienelement (1) zumindest einen Schalter oder Schaltkontakt oder einen Touchscreen oder ein kapazitives berührungsempfindliches Bedienfeld dem Bedienknopf (3) oder dem Schwenkhebel (18) oder dem mindestens einen Stellelement (17) zugeordnet aufweist, mittels welcher eine elektrische Steuerung der Richtung oder der Größe des Luftstroms erfolgt.

5. Bedienelement (1) nach einem der vorangehenden Ansprüche, **dadurch gekennzeichnet , das s** der Bedienknopf (3) ein ringförmiges Beleuchtungselement oder einen hinterleuchteten Ring aus durchsichtigem Kunststoff oder einen Ring aus reflektierendem Material aufweist, wobei die Lichtquelle ein Licht abgibt und derart positioniert ist, dass das Licht von dem reflektierenden Material reflektiert wird.

6. Bedienelement (1) nach einem der vorangehenden Ansprüche, **dadurch gekennzeichnet, dass** das Bedienelement (1) eine Anzeige (6) zur Darstellung der eingestellten Größe des Luftstroms umfasst.

7. Bedienelement (1) nach Anspruch 1, **dadurch g e - kennzeichnet,** dass das Bedienelement (1) ein weiteres, um den Bedienring (2) herum angeordnetes, ringförmiges Bedienrad (15) zum Einstellen einer weiteren Eigenschaft des Luftstroms umfasst.

8. Bedienelement (1) nach Anspruch 1 oder 2, **dadurch gekennzeichnet, dass** der Bedienring (2) den Bedienknopf (3) zumindest abschnittsweise umgibt und mindestens teilweise relativ gegenüber dem Bedienknopf (3) verdrehbar ist.

9. Bedienelement (1) nach Anspruch 8, **dadurch g e - kennzeichnet**, **dass** der Bedienknopf (3) mindestens um eine horizontale oder vertikale Achse verschwenkbar in einem Aufnahmegehäuse für den Bedienring (2) und den Bedienknopf (3) gelagert ist und rückseitig über gabelförmige Koppelelemente mit den Mechaniken der horizontalen und/oder vertikalen Lamellen (8, 9) verbunden sind.

10. Bedienelement (1) nach Anspruch 1, **dadurch ge** - **kennzeichnen**, **dass** der Bedienknopf (3) in einer Lagerhülse gelagert ist, die über definierte Segmente verlaufende Führungen für mindestens einen Schwenkhebel (18) mit einem Bedienansatz (19) aufweist, welcher Schwenkhebel (18) um die Mittenachse des zurückgestellten Bedienknopfes (3) schwenkbar und mit dem Mechaniken oder Kontakte zum Einstellen von Funktionen verbunden ist.

11. Bedienelement (1) nach Anspruch 1, **dadurch gekennzeichnet, dass** das drehbare Stellelement (17) ein aus der Ebene des Gehäuses, in welchem der Bedienknopf (3) gelagert ist, ein Drehknopf ist.

12. Bedienelement (1) nach Anspruch 1, 10 oder 11, **dadurch gekennzeichnet, dass** der Bedienknopf (3) in einer Lagerschale des Bedienringes (2) oder in der Lagerhülse (20) mindestens um eine vertikale und horizontale Achse verschwenkbar gelagert ist.

13. Bedienelement (1) nach Anspruch 1, **dadurch gekennzeichnet, dass** der Bedienknopf (3) um seinen Schwerpunkt oder seine Mittenachse verkippbar gelagert ist.

## Claims

1. Control element (1) for an air discharge device (7), comprising:
- a circular control knob (3) pivotable or rotatable supported at least in horizontal or vertical direction for controlling the direction of an air flow from the air discharge device,
- at least one control ring (2) arranged around the control knob (3) for adjusting at least the extent or amount of the air flow coming from the air discharge device, **characterized in that** the at least one control ring (2) controls the air flow over a connecting mechanism which is constructed as a gear in form of at least two engaging gear wheels (13) or gear segments and an air flap (12) arranged in the air flow of the air feed shaft and wherein the direction of the air flow is controllable by means of the control knob (3) over connecting rods (14) which are connected with mechanisms of horizontal and vertical fins (8, 9).

2. Control element (1) according to claim 1, **characterized in that** the control knob (3) comprises a dome-shaped recess (4) or an outward curved contour with grip ribs.

3. Control element (1) according to any of the preceding claims, **characterized in that** the at least one control ring (2) comprises notches or marking ribs or grip ribs at its outside.

4. Control element (1) according to claim 1, **characterized in that** the control element (1) comprises at least a switch or a switch contact or a touch screen or a capacitive touch sensitive control panel dedicated to the control knob (3) or the lever (18) or the at least one control member (17), by means of which an electrical control of the direction or the extent of the air flow is effected.

5. Control element (1) according to any of the preceding claims, **characterized in that** the control knob (3) comprises a ring-shaped lighting element or a backlit ring consisting of transparent plastic or a ring consisting of a reflecting material, wherein the light source emits light and is arranged such that the light is reflected by the reflective material.

6. Control element (1) according to any of the preceding claims, **characterized in that** the control element (1) comprises indication means (6) for displaying the adjusted extend of the air flow.

7. Control element (1) according to claim 1, **characterized in that** the control element (1) comprises a further ring-shaped control wheel (15) arranged around the control ring (2) for adjusting a further characteristic of the air flow.

8. Control element (1) according to claim 1 or 2, **characterized in that** the control ring (2) encompasses the control knob (3) at least in sections and is at least partially rotatable relative to the control knob (3).

9. Control element (1) according to claim 8, **characterized in that** the control knob (3) is pivotably supported around at least a horizontal or vertical axis in a supporting housing for the control ring (2) and the control knob (3) and is connected with the mechanisms of the horizontal and/or vertical fins (8, 9) on the rear side by means of bifurcate coupling elements.

10. Control element (1) according to claim 1, **characterized in that** the control knob (3) is supported in a bearing sleeve which comprises guidings extending over defined segments for at least one lever (18) comprising a control part (19), which lever (18) is pivotable around the center axis of the unpivoted control knob (3) and is connected with the mechanisms or the contacts for adjustment of functions.

11. Control element (1) according to claim 1, **characterized in that** the pivotable control member (17) from the plane of the housing, in which the control knob (3) is supported, is an adjusting knob.

12. Control element (1) according to claim 1, 10 or 11, **characterized in that** the control knob (3) is supported in a bearing seat of the control ring (2) or is pivotably supported around a vertical or horizontal axis in the bearing sleeve (20).

13. Control element (1) according to claim 1, **characterized in that** the control knob (3) is pivotably supported about its center of gravity or its center axis.

## Revendications

1. Élément de commande (1) pour un diffuseur d'air (7) avec :
- un bouton de commande (3) en forme de cercle, pouvant être basculé et/ou pivoté au moins à l'horizontale et à la verticale pour commander la direction d'un flux d'air sortant du diffuseur d'air (7),
- au moins une bague de commande (2) en forme d'anneau située autour du bouton de commande (3) pour régler au moins la taille ou la quantité du flux d'air sortant du diffuseur d'air (7), caractérisé en cela que la bague de commande (2) au moins au nombre d'une actionne le flux d'air via un mécanisme de connexion qui est équipé en tant qu'entraînement sous forme d'au moins deux roues à dent (13) intervenant l'une dans l'autre ou de segments de roues à dent et actionne un clapet à air (12) situé dans le flux d'air du canal d'air, ceci permettant de commander avec le bouton de commande (3) la direction du flux d'air via une tige (14) qui est connectée par des mécanismes de lamelles horizontales et verticales (8, 9).

2. Élément de commande (1) selon la revendication 1 caractérisé en cela que le bouton de commande (3) présente un logement (4) central en forme de calotte ou un contour courbé vers l'extérieur pourvu de rainures de saisie.

3. Élément de commande (1) selon l'une des revendications précédentes caractérisé en cela que la bague de commande (2) au moins au nombre d'une présente sur son côté extérieur des renfoncements ou des rainures de marquage ou de saisie.

4. Élément de commande (1) selon la revendication 1 caractérisé en cela que l'élément de commande (1) présente au moins un interrupteur ou un contact de commutation ou un écran tactile ou un champ de commande capacitif tactile situé sur le bouton de commande (3) ou le levier à bascule (18) ou l'élément de commande (17) au moins au nombre d'un à l'aide duquel une commande électrique a lieu pour la direction ou la taille du flux d'air.

5. Élément de commande (1) selon l'une des revendications précédentes caractérisé en cela que le bouton de commande (3) présente un élément d'éclairage en forme de bague ou un bague rétroéclairée en plastique transparent ou une bague dans un matériau réfléchissant, la source de lumière restituant une lumière et étant positionnée de telle sorte que la lumière est réfléchie par le matériau réfléchissant.

6. Élément de commande (1) selon l'une des revendications précédentes caractérisé en cela que l'élément de commande (1) comprend un écran (6) d'affichage de la taille réglée du flux d'air.

7. Élément de commande (1) selon la revendication 1 caractérisé en cela que l'élément de commande (1) comprend une autre roue de commande (15) en forme de cercle située autour de la bague de commande (2) pour régler une autre propriété du flux d'air.

8. Élément de commande (1) selon la revendication 1 ou 2 caractérisé en cela que la bague de commande (2) entoure le bouton de commande (3) au moins sur une section et peut être pivotée de manière au moins partiellement relative par rapport au bouton de commande (3).

9. Élément de commande (1) selon la revendication 8 caractérisé en cela que le bouton de commande (3) est placé de manière à basculer au moins autour d'un axe horizontal ou vertical dans un carter de logement pour la bague de commande (2) et le bouton de commande (3) et est relié sur l'arrière via des éléments de couplage en forme de fourche avec les mécanismes des lamelles horizontales et/ou verticales (8,9).

10. Élément de commande (1) selon la revendication 1 caractérisé en cela que le bouton de commande (3) est situé dans une douille à palier qui présente des guidages passant sur des segments définis pour au moins un levier à bascule (18) avec un mécanisme de commande (19), le levier à bascule (18) pouvant être basculé autour de l'axe médian du bouton de commande (3) reculé et étant relié avec les mécanismes ou les contacts pour régler les fonctions.

11. Élément de commande (1) selon la revendication 1 caractérisé en cela que l'élément de commande (17) pivotant au niveau du carter dans lequel le bouton de commande (3) est situé est un bouton pivotant.

12. Élément de commande (1) selon la revendication 1, 10 ou 11 caractérisé en cela que le bouton de commande (3) est situé dans une coque à palier de la bague de commande (2) ou dans la douille à palier (2) de manière à basculer au moins autour d'un axe vertical ou horizontal.

13. Élément de commande (1) selon la revendication 1 caractérisé en cela que le bouton de commande (3) est situé de manière à basculer autour de son centre de gravité ou de son axe médian.
